Europäisches Patentamt

European Patent Office

Office européen des brevets

(11) Veröffentlichungsnummer: **0 492 410 A1**

## (12) EUROPÄISCHE PATENTANMELDUNG

(21) Anmeldenummer: **91121728.9**

(22) Anmeldetag: **18.12.91**

(51) Int. Cl.5: **G06K 7/10**

(30) Priorität: **21.12.90 DE 4041336**

(43) Veröffentlichungstag der Anmeldung:
**01.07.92 Patentblatt 92/27**

(84) Benannte Vertragsstaaten:
**AT BE CH DE DK ES FR GB GR IT LI LU MC
NL SE**

(71) Anmelder: **Siemens Nixdorf
Informationssysteme Aktiengesellschaft
Fürstenallee 7
W-4790 Paderborn(DE)**

(72) Erfinder: **Kamin, Hartmut
Richard-Wagner-Strasse 50
W-1000 Berlin 10(DE)**
Erfinder: **Baitz, Günter
Krantorweg 13
W-1000 Berlin 27(DE)**

(74) Vertreter: **Schaumburg, Thoenes &
Englaender
Mauerkircherstrasse 31
W-8000 München 80(DE)**

(54) **Verfahren zum Lesen einer Code-Markierung auf Gegenständen.**

(57) Bei einem Verfahren zum Lesen einer Code-Markierung (12) auf Gegenständen (10) mittels einer Mehrzahl von optischen Abtastern (18, 20, 22), durch deren Abtastbereich die Gegenstände (10) bewegt werden, werden die Markierungen (12) auf Flächenbereichen der Gegenstände (10) aufgebracht, deren Flächennormalen einen Winkel miteinander bilden, wobei die Abtaststrahlen jeweils nur in einer Abtastebene (28, 30, 36) bewegt werden und wobei die Abtastebenen (28, 30, 36) und die Hauptabtastrichtungen (24, 26, 34) mindestens zweier Abtastebenen (28, 30, 36) jeweils einen Winkel miteinander bilden.

Fig. 2

Die Erfindung betrifft ein Verfahren zum Lesen einer Code-Markierung auf Gegenständen mittels einer Mehrzahl von optischen Abtastern, durch deren Abtastbereich die Gegenstände bewegt werden.

Bisher war automatisches Abtasten der Code-Markierungen, beispielsweise das Lesen von Preisetiketten im Barcode-Format auf Gegenständen unterschiedlicher Größe in ungeordneten Positionen sehr schwierig. Um Fehlerlesungen wegen ungenauer Ausrichtung der Markierungen relativ zu den Abtastern zu verhindern, mußte der Abtaststrahl eine Fläche abtasten. Dieses Abtasten ist aber nur über eine sehr eingeschränkte Distanz möglich, da es sonst zu Verzerrungen und damit Fehllesungen kommt. Dadurch war es auch nicht möglich, mit einfachen Abtastanordnungen sowohl kleine wie auch große Artikel automatisch abzutasten, es sei denn, die Gegenstände wurden beispielsweise mit ihrer Markierung auf eine Transportfläche gelegt, so daß die Markierung über ein Fenster geführt wurde, um so einen definierten Abstand zur Abtasteinrichtung herzustellen.

Der Erfindung liegt die Aufgabe zugrunde, ein Verfahren der eingangs genannten Art anzugeben, das die Verwendung einfacher Abtasteinrichtungen zum automatischen Lesen von Markierungen auch auf ungeordneten Gegenständen erlaubt.

Diese Aufgabe wird erfindungsgemäß dadurch gelöst, daß die Markierungen auf Flächenbereichen der Gegenstände aufgebracht sind, deren Flächennormalen einen Winkel miteinander bilden, und daß die Abtaststrahlen jeweils nur in einer Abtastebene bewegt werden, wobei die Abtastebenen und die Hauptabtastrichtungen mindestens zweier Abtaststrahlen jeweils einen Winkel miteinander bilden.

Dieses Verfahren gewährleistet es, die Markierungen auf Gegenständen zu erfassen, unabhängig davon, wie die Gegenstände auf ihrer Unterlage liegen. Ein Flächenbereich mit einer Markierung kann stets erfaßt werden. Die verwendeten linearen Scanner oder Abtaster sind wesentlich preiswerter und haben vor allem den Vorteil, daß sie eine höhere Schärfentiefe besitzen als Abtaster, die einen Flächenbereich abtasten. Damit können auch Gegenstände unterschiedlicher Größe erfaßt werden, ohne daß zunächst ein definierter Abstand zwischen der Markierung und dem Abtaster hergestellt werden muß. Bevorzugte Ausführungsformen der Erfindung sind in den Unteransprüchen angegeben.

Die Erfindung betrifft ferner ein Verfahren zum Kennzeichnen von Gegenständen mittels eines Strichcodes, der eine Mehrzahl von in Abständen parallel zueinander verlaufenden Strichen umfaßt, wobei erfindungsgemäß die Striche des Codes die Gegenstände umlaufende mindestens annähernd geschlossene Linien bilden. Dabei kann der Strichcode in an sich bekannter Weise entweder direkt auf den Gegenstand, beispielsweise eine Ware oder Warenverpackung aufgebracht oder auch auf ein Ettikett gedruckt werden, das an dem Gegenstand befestigt wird. Wichtig ist dabei, daß die den Strichcode bildenden Linien oder Striche um den Gegenstand herumgeführt sind.

Damit kann das oben beschriebene Leseverfahren mit besonders hoher Zuverlässigkeit ausgeführt werden. Darüberhinaus ist diese Art der Markierung einfach ausführbar und kann auf Gegenstände beliebiger Form und Größe angewendet werden.

Weitere Merkmale und Vorteile der Erfindung ergeben sich aus der folgenden Beschreibung, welche in Verbindung mit den beiden Figuren die Erfindung anhand von Ausführungsbeispielen erläutert. Es zeigen:

Figur 1    einen in der erfindungsgemäßen Weise markierten Gegenstand,

Figur 2    eine schematische Darstellung einer Transporteinrichtung für abzutastende Gegenstände mit einer ersten Anordnung von Abtastern und

Figur 3    eine der Figur 2 entsprechende Darstellung mit einer zweiten Anordnung von Abtastern.

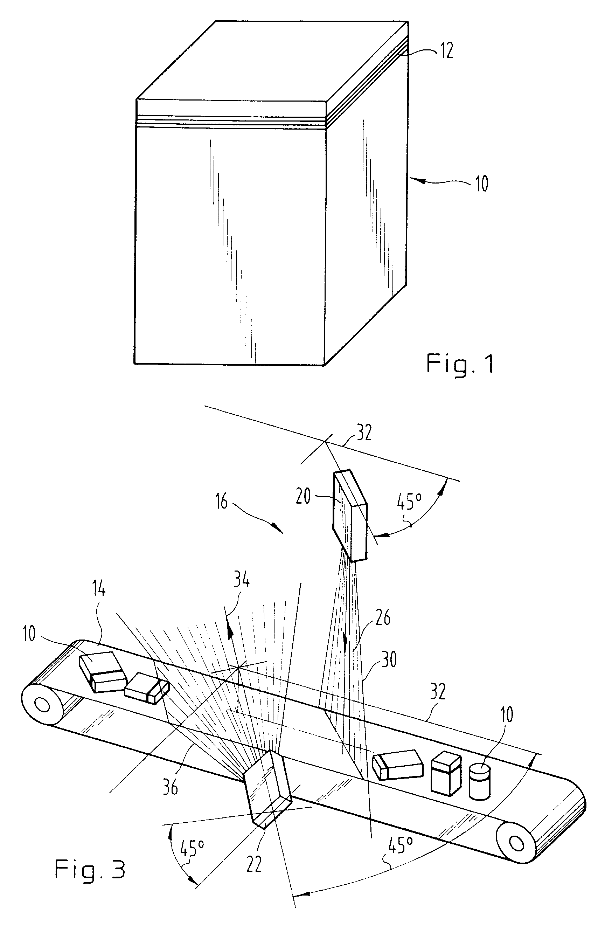

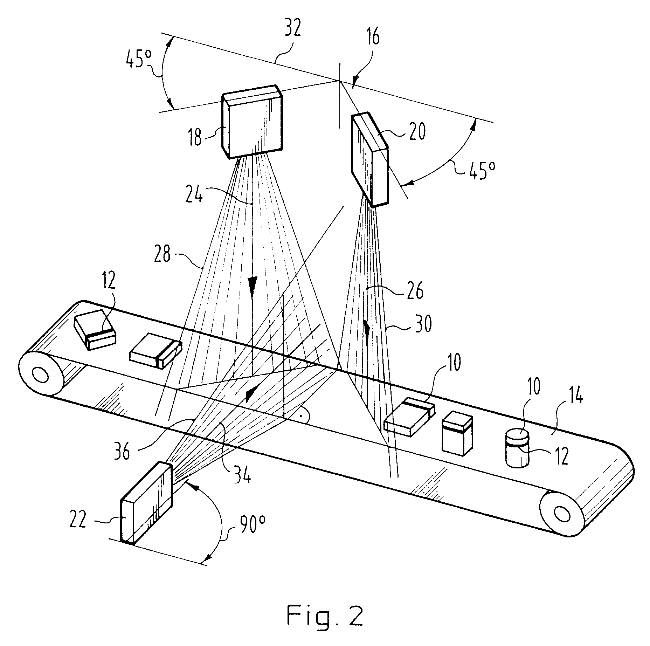

Figur 1 zeigt einen quaderförmigen Gegenstand 10, der mit einer ringförmig umlaufenden Barcode-Markierung 12 versehen ist. Diese ringförmige Markierung macht es möglich, daß z.B. mit drei in geeigneter Weise positionierten Abtastern, wie dies anhand der Figur 2 noch beschrieben wird, der Gegenstand identifiziert werden kann, und zwar unabhängig von seiner Lage. Die Art der Markierung erlaubt es, eine sehr schmale Markierung zu verwenden, so daß die Oberflächengestaltung des Artikels im wesentlichen beibehalten werden kann.

In der Abtastvorrichtung werden die Gegenstände 10 in ungeordeter Lage und Reihenfolge auf ein Förderband 14 gelegt und von diesem an der allgemein mit 16 bezeichneten Abtastvorrichtung vorbeibewegt. Diese umfaßt bei der Ausführungsform gemäß Figur 2 drei Linearscanner 18, 20 und 22. Die Linearscanner 18 und 20 sind so angeordnet, daß ihre Hauptabtastrichtung 24 bzw. 26 senkrecht zur Ebene des Förderbandes 14 gerichtet ist. Der Abtaststrahl bewegt sich dabei jeweils in einer Ebene 28 bzw. 30, die ebenfalls senkrecht auf der Auflagefläche der Gegenstände 10 steht. Dabei bilden die beiden Abtastebenen 28 und 30 jeweils einen Winkel von 45° mit der Transportrichtung 32. Miteinander schließen sie somit einen Winkel von 90° ein.

Der dritte Linearscanner 22 ist so angeordnet, daß seine Hauptabtastrichtung 34 senkrecht zur Hauptabtastrichtung 24 bzw. 26 der Linearscanner 18 bzw. 20 ist und daß seine Abtastebene 36 sowohl senkrecht zur Ebene des Förderbandes 14 als auch senkrecht zur Förderrichtung 32 gerichtet ist. Wie man aus der Lage der Gegenstände 10 auf dem Förderband 14 und der Anordnung der Linearscanner 18 bis 22 erkennen kann, gerät jeder der Gegenstände 10 mit seiner Markierung 12 irgendwann so in den Abtastbereich mindestens eines der Linearscanner 18 bis 22, daß die Markierung 12 gelesen werden kann. Durch die Verwendung von Linearscannern 18, 20, 22 mit ihrer erheblich größeren Schärfentiefe können die Gegenstände nicht nur ungeordnet auf das Förderband 14 gelegt werden, sondern es können auch Gegenstände recht unterschiedlicher Größe abgetastet werden.

In Figur 3 ist eine weitere Ausführungsform der erfindungsgemäßen Lösung angegeben, die mit zwei Abtastern auskommt. Der Linearscanner 18 ist entfallen. Der Linearscanner 22 ist dafür so ausgerichtet, daß seine Hauptabtastrichtung 34 parallel zum Förderband 14, aber unter einem Winkel von 45° zur Förderrichtung 32 gerichtet ist. Die Abtastebene 36 ist unter 45° gegenüber der horizontalen Auflagefläche des Förderbandes 14 geneigt. Durch diese Schräglage der Abtastebene kann bei der dargestellten Anordnung der Markierung auf den Gegenständen 10 die Markierung bei jeder beliebigen Lage des Gegenstandes erfaßt werden.

**Patentansprüche**

1. Verfahren zum Lesen einer Code-Markierung (12) auf Gegenständen (10) mittels einer Mehrzahl von optischen Abtastern (18, 20, 22), durch deren Abtastbereich die Gegenstände (10) bewegt werden, dadurch **gekennzeichnet**, daß die Markierungen (12) auf Flächenbereichen der Gegenstände (10) aufgebracht sind, deren Flächennormalen einen Winkel miteinander bilden, und daß die Abtaststrahlen jeweils nur in einer Abtastebene (28, 30, 36) bewegt werden, wobei die Abtastebenen (28, 30, 34) und die Hauptabtastrichtungen (24, 26, 34) mindestens zweier Abtastebenen (28, 30, 36), jeweils einen Winkel miteinander bilden.

2. Verfahren nach Anspruch 1, dadurch **gekennzeichnet**, daß mindestens eine Abtastebene (30) senkrecht zur Auflageflache (14) der Gegenstände gerichtet ist und mindestens eine weitere Abtastebene (36) einen von 90° verschiedenen Winkel mit der Auflagefläche (14) und der Transportrichtung (32) der Gegenstände (10) bildet.

3. Verfahren nach Anspruch 1, dadurch **gekennzeichnet**, daß zur Auflagefläche (14) der Gegenstände (10) senkrechte Abtastebenen (28, 30, 36) vorgesehen sind, von denen zwei Abtastebenen einen mindestens annähernd rechten Winkel miteinander bilden und die dritte Abtastebene (46) die Winkelhalbierende zwischen den beiden ersten Abtastebenen (28, 30) enthält, wobei die Hauptabtastrichtung (34) des Abtaststrahles der letzteren senkrecht zu der Hauptabtastrichtung (24, 26) der beiden erstgenannten Abtaststrahlen ist.

4. Verfahren nach Anspruch 3, dadurch **gekennzeichnet**, daß die beiden ersten Abtastebenen (28, 30) einen Winkel von ca. 45° und die dritte Abtastebene (36) einen Winkel von ca 90° mit der Bewegungsrichtung der Gegenstände (10) bilden.

5. Verfahren nach einem der Ansprüche 1 bis 4, dadurch **gekennzeichnet**, daß die Code-Markierung (12) von einem umlaufenden mindestens annähernd geschlossenen Markierungsring gebildet ist.

6. Verfahren zum Kennzeichnen von Gegenständen mittels eines Strichcodes (12), der eine Mehrzahl von in Abständen parallel zueinander verlaufenden Strichen umfaßt, dadurch **gekennzeichnet**, daß die Striche des Codes (12) die Gegenstände (10) umlaufende mindestens annähernd geschlossene Linien bilden.

7. Verfahren nach Anspruch 6, dadurch **gekennzeichnet**, daß der Strichcode (12) auf ein Ettikett aufgebracht wird, das auf dem Gegenstand (10) befestigt wird.

8. Verfahren nach Anspruch 6, dadurch **gekennzeichnet**, daß der Strichcode (12) direkt auf den Gegenstand (10) aufgebracht wird.

9. Anordnung eines Strichcodes (12) auf Gegenständen (10) zur Kennzeichnung derselben, umfassend eine Mehrzahl von in Abständen parallel zueinander verlaufenden Strichen, dadurch **gekennzeichnet**, daß die Striche des Codes (12) die Gegenstände (10) umlaufende mindestens annähernd geschlossene Linien bilden.

Fig. 1

Fig. 3

Fig. 2

Europäisches
Patentamt

# EUROPÄISCHER RECHERCHENBERICHT

Nummer der Anmeldung

EP  91 12 1728

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-9 009 006 (METROLOGIC INSTRUMENTS, INC.)<br>* Ansprüche 13,14; Figur 6 *<br>--- | 1-4 | G 06 K  7/10 |
| A | FR-A-2 367 320 (LABORATOIRES DE PHYSICOCHIMIE APPLIQUEE ISSEC S.A.)<br>* Figur 1 *<br>--- | 1 | |
| A | EP-A-0 129 084 (WESTINGHOUSE ELECTRIC CORP.)<br>* Zusammenfassung; Figuren 3,4 *<br>--- | 1,5,6,9 | |
| A | EP-A-0 256 804 (EMHART INDUSTRIES, INC.)<br>* Zusammenfassung; Figur 2a *<br>----- | 1,2 | |

| | RECHERCHIERTE SACHGEBIETE (Int. Cl.5) |
|---|---|
| | G 06 K<br>B 65 B |

Der vorliegende Recherchenbericht wurde für alle Patentansprüche erstellt

| Recherchenort | Abschlußdatum der Recherche | Prüfer |
|---|---|---|
| BERLIN | 28-02-1992 | ZOPF K |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
.............................................................................
& : Mitglied der gleichen Patentfamilie, übereinstimmendes
    Dokument